# EUROPÄISCHE PATENTSCHRIFT

(11) **EP 0 893 509 B1**
(45) Veröffentlichungstag und Bekanntmachung des Hinweises auf die Patenterteilung: **04.02.2004**
(21) Anmeldenummer: 98250233.8
(22) Anmeldetag: 24.06.1998
(51) Int. Cl.: C21C 5/40, F27D 9/00, F28F 1/40

(54) **Abhitzekessel**
Waste heat boiler
Chaudière de récuperation

(30) Priorität: 23.07.1997 DE 19732537
(43) Veröffentlichungstag der Anmeldung: 27.01.1999
(73) Patentinhaber: Mannesmannröhren-Werke AG, 45473 Mülheim a.d. Ruhr (DE)
(72) Erfinder: Kaiser, Heinz-Peter Dr., 47506 Neukirchen-Vluyn (DE); Höning, Manfred Dipl.-Ing., 47509 Rheurdt (DE); Burau, Armin Dipl.-Ing., 47269 Duisburg (DE)
(74) Vertreter: Henze, Lothar, Dipl.-Ing.

(56) Entgegenhaltungen:
- EP-A- 0 591 094
- EP-A- 0 701 100
- DE-A- 4 425 006
- US-A- 3 397 678
- US-A- 3 625 500
- GUDENAU H W ET AL: "SCHUTZ VON KONVERTERABHITZEKESSELWANDEN DURCH PLASMAGESPRITZTE BESCHICHTUNGEN" STAHL UND EISEN, Bd. 114, Nr. 1, 20. Januar 1994, Seiten 25-29, 115, XP000425957
- GUDENAU H W ET AL: "MASSNAHMEN ZUR VERMINDERUNG DES ROHRVERSCHLEISSES IN KONVERTERABHITZEKESSELN MEASURES FOR REDUCING TUBE WEAR IN CONVERTER WASTE-HEAT BOILERS" STAHL UND EISEN, Bd. 113, Nr. 12, 13. Dezember 1993, Seiten 119-125, 158, XP000422782

## Beschreibung

Die Erfindung betrifft einen Abhitzekessel, insbesondere eines Konverterstandes gemäß dem Oberbegriff des Patentanspruches 1.

In einem Stahlwerk wird insbesondere im Konverterstand beim Frischen von Roheisen zu Stahl mit viel Sauerstoff und anderen Gasen gearbeitet, so dass zwangsläufig eine große Menge an heißem Rauchgas entsteht. Das Rauchgas führt aber prozeßbedingt auch Staubteilchen mit, die aus Gründen gesetzlicher Auflagen entfernt werden müssen. Da die bekannten Staubabscheidevorrichtungen aber als Dauerbelastung nur unterhalb einer bestimmten Temperatur betrieben werden können, muß zuvor das Rauchgas abgekühlt werden. Dies geschieht mittels eines oder mehrerer Abhitzekessel, die im Absaugbereich des Konverterstandes angeordnet sind. Der Abhitzekessel wird gebildet aus Kühlwänden, die sich aus im wesentlichen parallel liegenden nahtlosen Kesselrohren zusammensetzen. Durch diese Rohre fließt Kühlwasser und durch den Wärmeübergang des an den Kühlwänden vorbeistreichenden Rauchgases wird das Rauchgas gekühlt.

Je nach Prozeßführung kann der Staubanfall niedrig oder hoch sein. Hoher Staubanfall bedeutet aber für die direkt vom Rauchgas beaufschlagten Kesselrohre eine hohe Erosionsrate, da bedingt durch die hohen Abzugsleistungen der angeordneten Gebläse die Geschwindigkeit des vorbeistreichenden Rauchgases sehr hoch ist. Dies führt früher oder später zum Ausfall des Abhitzekessels, da bei Unterschreitung einer bestimmten Wanddicke die verbleibende Wand dem Innendruck des durchströmenden Wassers nicht mehr standhalten kann.

Dieses Problem versuchte man dadurch zu lösen, dass man auf die davon betroffenen Kesselrohre eine erosionswiderstandsfähige Panzerung auf der Außenoberfläche anbrachte. Als eine günstige Beschichtungsmethode hat sich Plasmaspritzen herausgestellt (H.W. Gudenau u.a. "Schutz von Konverterabhitzekesselwänden durch plasmagespritzte Beschichtungen", Stahl und Eisen Nr.114 (1994), Nr. 1, S. 25-29) Nach Einbau dieser so behandelten Rohre stellte sich aber sehr schnell heraus, dass diese Rohre noch schneller versagten als die ohne Panzerung. Man hatte übersehen, dass durch die Panzerung, die im Regelfall ein schlechterer Wärmeleiter ist als das Rohrmaterial selbst, der Wärmeübergang so stark verringert wurde, dass es zu örtlichen Überhitzungen kam und die Warmfestigkeit nicht mehr ausreichte und die Rohre versagten. Nach diesem gescheiterten Versuch der Problemlösung wurde die Panzerung wieder entfernt, um so die bis dahin üblichen Auswechselzyklen wieder zu erreichen.

Aufgabe der vorliegenden Erfindung ist es, einen Abhitzekessel insbesondere eines Konverterstandes zu entwickeln, dessen Kesselrohre auch bei schräger Anordnung eine höhere Standzeit aufweisen.

Diese Aufgabe wird ausgehend vom Oberbegriff in Verbindung mit den kennzeichnenden Merkmalen des Patentanspruches 1 gelöst. Durch die Anordnung der wendelförmigen Innenrippen wird das durchströmende Kühlmedium stark verwirbelt und somit der Wärmeübergang verbessert. Dies gilt insbesondere für die Bereiche des Abhitzekessels, wo infolge des Temperaturanstieges des Kühlmediums dieses sich zustandsmäßig im Naßdampfgebiet befindet und erste Blasen im Rohr aufsteigen. Diese Blasen können sich auf einer Wandseite ansammeln, so dass sie eine Sperre bilden und der Wärmeübergang in diesem Bereich stark verringert wird. Diese Situation tritt insbesondere in den Bereichen des Abhitzekessels auf, wo die Rohre schräg nach oben verlaufen.
Das Kesselrohr weist mindestens vier, vorzugsweise sechs Innenrippen auf mit einem Steigungswinkel von 20 bis 40 Grad.
Die Innenrippe ist im Querschnitt gesehen trapezförmig mit einer Rippenhöhe (H) von 0,8 - 12 mm, einer Rippenbreite am Kopf (F) von 4,5 - 6,5 mm und einem Rippenseitenwinkel (K) von 40 - 60 Grad.

Durch die erfindungsgemäße Anordnung von wendelförmigen Innenrippen wird diese Blasenansammlung vermieden und der Wärmeübergang auch in diesem kritischen Bereich verbessert. Nach ersten Testversuchen war es möglich, insbesondere die außenliegenden Kesselrohre wieder mit der schon bekannten Panzerung zu versehen, um auf diese Weise die Erosionsrate zu erniedrigen. Als Panzerung wird eine aufspritzbare Metallegierung vorgesehen.
Der Zyklus zum Auswechseln des Abhitzekessels konnte durch diese Maßnahmen wesentlich erhöht werden, so dass er in den Zeitraum der ansonsten fälligen
Großreparaturen miteingeplant werden kann und die Zwangsabschaltungen der Anlage nicht mehr erforderlich sind.

In der Zeichnung wird anhand einer Prinzipskizze ein erfindungsgemäß ausgebildeter Abhitzekessel näher erläutert. Es zeigen:

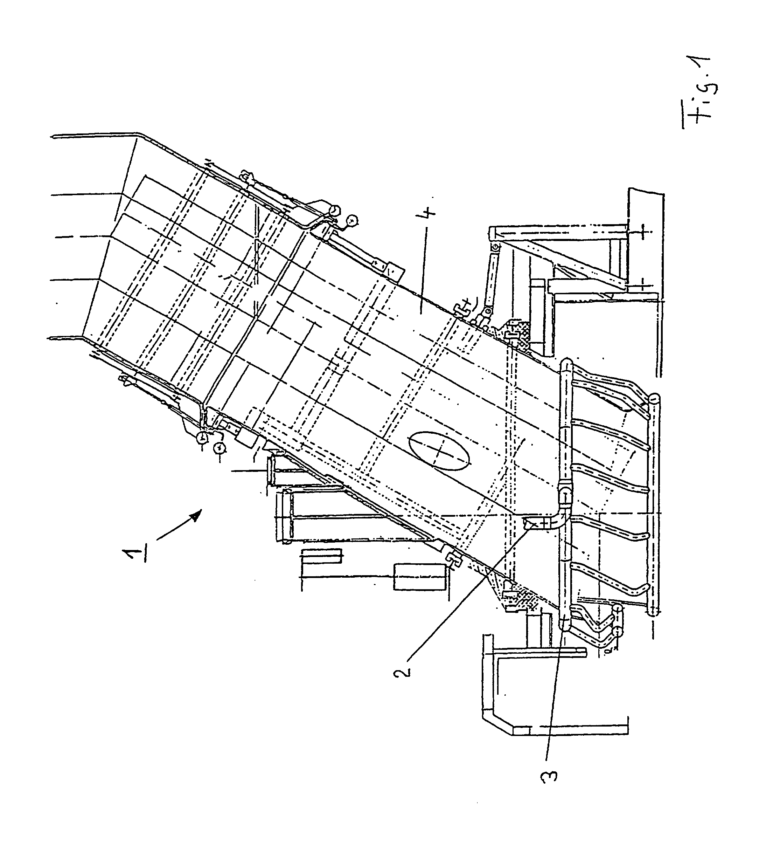

- Figur 1: eine Draufsicht auf einen Abhitzekessel
- Figur 2: einen Abschnitt eines Axialschnittes durch das erfindungsgemäß ausgebildete Kesselrohr
- Figur 3: ein Segment eines Radialschnittes durch das erfindungsgemäß ausgebildete Kesselrohr

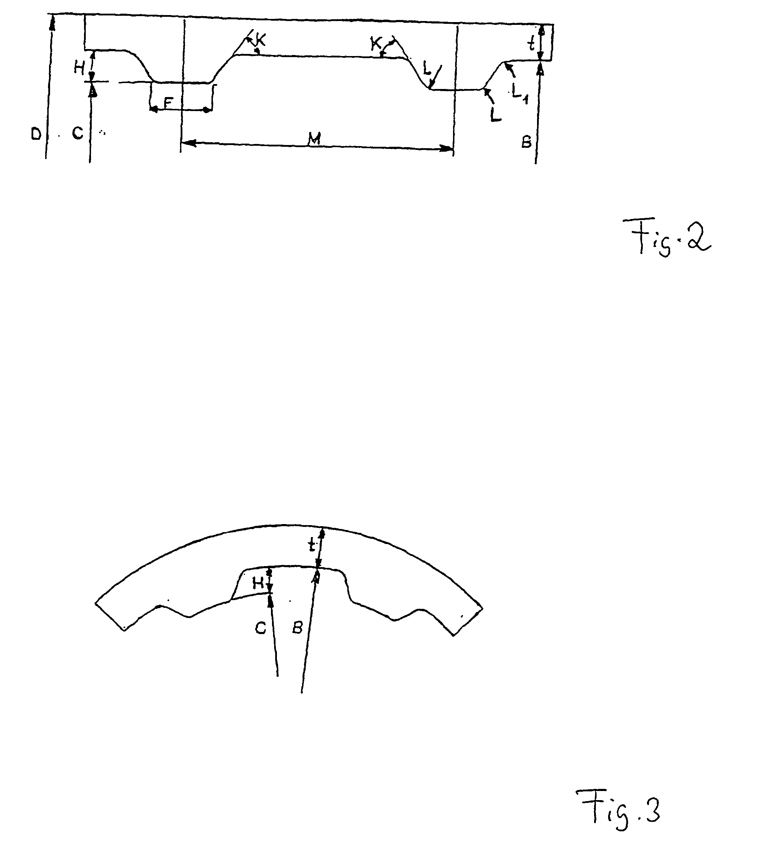

Über einen hier nicht dargestellten Konverterstand ist ein Abhitzekessel 1 angeordnet. Er weist ein Zuleitungsrohr 2 und ein den Abhitzekessel umfassendes Verteilerrohr 3 auf. Über dieses Verteilerrohr 3 werden die hier nicht näher dargestellten Kühlwände 4 gespeist. Die Kühlwände bestehen aus einer Vielzahl von im Abstand voneinander angeordneten parallel liegenden Kesselrohren. Die erfindungsgemäße Innenberippung eines Teiles der Kesselrohre ist in den Figuren 2 und 3 dargestellt. Die Buchstaben in den beiden Figuren haben die folgende Bedeutung.
B = Nenninnendurchmesser (23, 55 mm)
C = Mindestinnendurchmesser (20, 71 mm)
D = Rohraußendurchmesser (33, 70 mm)
F = Rippenbreite am Kopf (5,59 mm)
H = Rippenhöhe (1,02 mm)
K = Rippenseitenwinkel (50 Grad)
L, L₁ = Rippenradius (0,4 - 2 mm)
M = Rippensteigung (111 mm)
t = Mindestwanddicke (4,57 mm)

Die in Klammern gesetzten Zahlen sind ein Beispiel für eine konkrete Ausführung, mit der der gewünschte Effekt einer Verlängerung der Standzeit erreicht wurde. Als Werkstoff für das erfindungsgemäß ausgebildete Kesselrohr wurde ein üblicher Kesselrohrbaustahl wie z. B. 10 CrMo9.10 verwendet.

## Patentansprüche

1. Abhitzekessel (1), insbesondere eines Konverterstandes, bestehend aus mit parallel liegenden Kesselrohren versehenen Kühlwänden (4), die innen von Wasser durchströmt und außen mit heißem Rauchgas beaufschlagt werden, wobei die Außenoberfläche der Kesselrohre mit einer erosionswiderstandsfähigen Panzerung beschichtet ist,
**dadurch gekennzeichnet,**
**dass** wenigstens in den belastungsmäßig kritischen Bereichen der Kühlwände (4) die Kesselrohre innen mit wendelförmig verlaufenden Innenrippen versehen sind.

2. Abhitzekessel nach Anspruch 1,
**dadurch gekennzeichnet,**
**dass** das Kesselrohr mindestens vier vorzugsweise sechs Innenrippen aufweist mit einem Steigungswinkei von 20 bis 40 Grad.

3. Abhitzekessel nach Anspruch 2,
**dadurch gekennzeichnet,**
**dass** die Innenrippe im Querschnitt gesehen trapezförmig ist mit einer Rippenhöhe (H) von 0,8 - 1,2 mm, einer Rippenbreite am Kopf (F) von 4,5 - 6,5 mm und einem Rippenseitenwinkel (K) von 40 - 60 Grad.

4. Abhitzekessel nach den Ansprüchen 2 und 3,
**dadurch gekennzeichnet,**
**dass** die Kanten der Innenrippen abgerundet sind (L, L1) und einen Radius im Bereich von 0,4 bis 2 mm aufweisen.

## Claims

1. A waste heat boiler (1), in particular of a converter stand, consisting of cooling walls (4) provided with parallel boiler tubes, through the inside of which walls water flows and the outsides of which walls are acted upon by hot flue gas, the outer surface of the boiler tubes being coated with erosion-resistant cladding, **characterised in that** the boiler tubes are provided internally with spiral internal ribs at least in the critical load regions of the cooling walls (4).

2. A waste heat boiler according to Claim 1, **characterised in that** the boiler tube has at least four, preferably six, internal ribs with an angle of inclination of 20 to 40 degrees.

3. A waste heat boiler according to Claim 2, **characterised in that** the internal rib is trapezoidal when viewed in cross-section, with a rib height (H) of 0.8 - 1.2 mm, a rib width at the top (F) of 4.5 - 6.5 mm and a rib side angle (K) of 40 - 60 degrees.

4. A waste heat boiler according to Claims 2 and 3, **characterised in that** the edges of the internal ribs are rounded off (L, L1) and have a radius in the range from 0.4 to 2 mm.

## Revendications

1. Chaudière de récupération (1), en particulier chaudière de récupération d'une base de convertisseur, comportant des parois de refroidissement (4) à tubes de chaudière parallèles, qui intérieurement sont parcourues par de l'eau et extérieurement sont soumises à des gaz de fumée chauds, dans laquelle la surface externe des tubes de chaudière est revêtue d'un blindage résistant à l'érosion,
**caractérisée en ce que**, au moins dans des zones des parois de refroidissement (4) critiques en ce qui concerne les contraintes, les tubes de chaudière sont pourvus intérieurement de nervures internes hélicoïdales.

2. Chaudière selon la revendication 1,
**caractérisée en ce que** le tube de chaudière comporte au moins quatre, de préférence six, nervures internes présentant un angle d'inclinaison de 20 à 40 degrés.

3. Chaudière selon la revendication 2,
**caractérisée en ce que** la nervure interne présente, en section, une forme trapézoïdale avec une hauteur (H) comprise entre 0,8 et 1,2 mm, une largeur (F) du côté opposé au tube comprise entre 4,5 et 6,5 mm et un angle de pente latérale (K) compris entre 40 et 60 degrés.

4. Chaudière selon les revendications 2 et 3,
**caractérisée en ce que** les arêtes (L, L1) des nervures internes sont arrondies et présentent un rayon compris entre 0,4 et 2 mm.
